# EUROPEAN PATENT APPLICATION

(11) **EP 4 382 407 A1**
(43) Date of publication of application: **12.06.2024**
(21) Application number: 22852896.4
(22) Date of filing: 26.07.2022
(51) Int. Cl.: B63B 35/00, A01K 63/04, B63B 35/44, B63B 59/04, B63J 3/04, C01B 13/02, C01B 21/04, F03B 13/12, F03D 1/06, F03D 9/00

(54) **FLOATING POWER GENERATION UNIT**

(30) Priority: 05.08.2021 JP 2021129172
(71) Applicant: Anzai, Satoshi, Yokohama-shi Kanagawa 230-0071 (JP)
(72) Inventor: Anzai, Satoshi, Yokohama-shi Kanagawa 230-0071 (JP)
(74) Representative: Algemeen Octrooi- en Merkenbureau B.V.
(86) International application number: PCT/JP2022/028755
(87) International publication number: WO 2023/013473

(57) **Abstract**

A floating power generation unit is provided which, by dispersing oxygen content in water as fine air bubbles while generating power on the water, increases the activity of aerobic organisms, promotes plankton growth, and improves fishing grounds. This floating power generation unit (1) is provided with a power generator (2), an oxygen separator (3) which uses power supplied by the power generator (2) to separate nitrogen and oxygen in the air, and a float (4) which floats on the water. The power generator (2) and the oxygen separator (3) are arranged on the top surface of the float (4). The floating power generation unit (11) is provided with a first fine air bubble generating medium (33) which supplies the oxygen separated by the oxygen separator (3) into the water as fine air bubbles, and is provided with a second fine air bubble generating medium (34) which supplies the nitrogen separated by the oxygen separator (3) into the water as fine air bubbles.

## Description

### TECHNICAL FIELD

The present invention relates to a technology of a floating power generation unit including a structure such as a power generator and installed on a float floating on the sea or on a lake, the floating power generation unit including an oxygen supply device that supplies oxygen to water around the float.

### BACKGROUND ART

In recent years, development of so-called renewable natural energy has attracted attention, which converts natural energy such as wind power, wave power, a tidal current/an ocean current, and a water flow on water such as on the sea or on a lake into electric energy to generate electricity.

As an example of the floating power generation unit from which renewable natural energy can be obtained, there is a so-called floating wind power generation unit capable of converting wind power on water into electric energy to generate power, and the practical application of the floating water wind power generation unit is in progress. Further, there is also an example of a floating tidal power generation unit in which a weir is opened at the time of high tide, sea water is introduced into the bay, the weir is closed at the time of low tide, and sea water is introduced into a turbine to convert kinetic energy of tidal current (movement of sea water due to tide) into electric power, and the floating tidal power generation unit is being put into practical use.

The floating wind power generation unit, which is an example of a floating power generation unit, is configured to be able to rotate a power generation wind turbine installed on a floating facility using the wind power on the water, converts it into electrical energy, and then transmits the obtained electric power through an underwater cable.

### CITATIONS LIST

### PATENT LITERATURE

Patent Literature 1: JP-A 2021-30893 Gazette

### SUMMARY OF INVENTION

### TECHNICAL PROBLEMS

However, in the water in the vicinity of the floating power generation unit, an ocean current and a water flow are easily inhibited, and sea water or lake water stagnates and oxygen is not sufficiently supplied, so that a good fishing ground may not be formed. When the supply amount of oxygen is insufficient, the generation amount of plankton or the like as food for fish is reduced, so that fish hardly gather and the growth of nearby fish is also adversely affected.

In addition, an ocean current near the float is also likely to be retained, and deterioration of the float by generation of barnacles and microorganisms have occurred. The deterioration of the float increases the maintenance cost of the floating power generation unit, and the cost saving performance of not using land or the like, which is an advantage of the floating power generation unit, may be impaired.

Therefore, in view of such problems, the present invention provides a floating power generation unit capable of enhancing the activity of aerobic organisms, promoting the growth of plankton, and improving fishing grounds by spraying oxygen content as fine air bubbles into water while performing floating power generation.

### SOLUTIONS TO PROBLEMS

The problem to be solved by the present invention is as described above, and means for solving the problem will be described below.

That is, according to the present invention, there is provided a floating power generation unit including:
a power generator;
an oxygen separator that separates oxygen and nitrogen in air using electric power supplied by the power generator; and
a float floating on water, in which
the power generator and the oxygen separator are installed on an upper surface of the float,
a first fine air bubble generating medium that supplies oxygen separated by the oxygen separator into water as fine air bubbles, and
a second fine air bubble generating medium that supplies nitrogen separated by the oxygen separator into water as fine air bubbles.

In the present invention, preferably, the first fine air bubble generating medium and the second fine air bubble generating medium may be formed of a carbon-based porous material.

In the present invention, preferably, the first fine air bubble generating medium may be disposed at a position deeper in water depth than the second fine air bubble generating medium.

Further, in the present invention, nitrogen separated by the oxygen separator may be supplied to the power generator and the oxygen separator to fill the power generator and the oxygen separator with the nitrogen.

### ADVANTAGEOUS EFFECTS OF INVENTION

As effects of the present invention, the following effects are obtained.

In the present invention, it is possible to spray an oxygen content generated by an oxygen separator that separates oxygen and nitrogen in air using electric power of a power generator into water as fine air bubbles while performing floating power generation. As a result, it is possible to increase the activity of aerobic organisms, promote the growth of plankton, and improve fishing grounds. In addition, the generation of barnacles and the like can be suppressed by causing the nitrogen component generated by the oxygen separator to flow out to the vicinity of the float. Besides, the oxidation can be suppressed to suppress deterioration of the float, and the maintenance cost can be reduced. Furthermore, by adding fine air bubbles to the inside of the float in order to prevent oxidation, it is possible to prevent weathering of each device of the floating power generation unit and to prolong the life of the device.

In addition, in the present invention, since the fine air bubble generating medium is formed of a carbon-based porous material, the fine air bubble generating medium is not deteriorated even if it is disposed in water for a long period of time, so that maintainability is improved.

Besides, in the present invention, the oxygen content generated by the oxygen separator can be released to a water area having a deep water depth where there are many aquatic organisms. In addition, the nitrogen component generated by the oxygen separator can be released to a water area having a shallow water depth where the lower surface of the float is disposed.

In the present invention, by filling the power generator and the oxygen separator with nitrogen separated by the oxygen separator, it is possible to prevent oxidation of each component in the power generator and the oxygen separator, suppress generation of rust, and prevent deterioration.

### BRIEF DESCRIPTION OF DRAWINGS

FIG. 1 is a front view illustrating an overall configuration of a floating power generation unit according to an embodiment of the present invention.
FIG. 2 is a front view illustrating a configuration of a floating power generation unit and a wind power generator according to an embodiment of the present invention.
FIG. 3 is a front view showing a configuration of an oxygen separator according to an embodiment of the present invention.

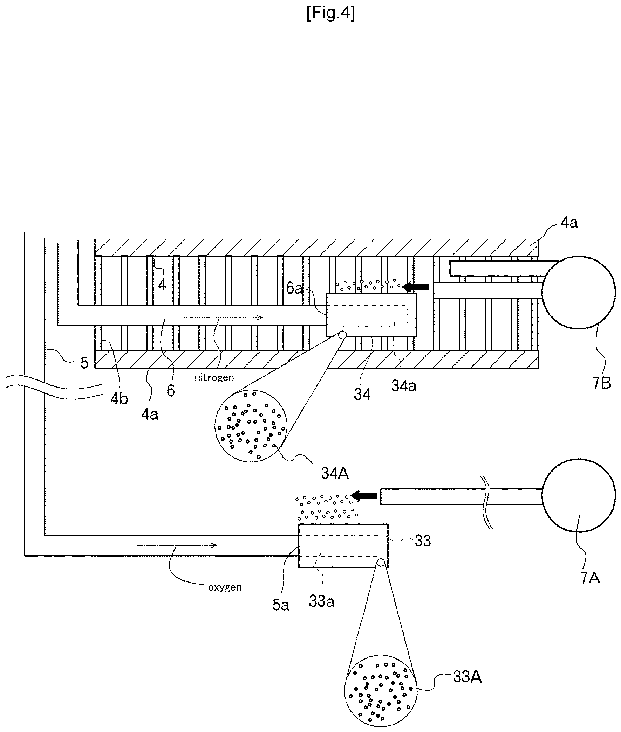

FIG. 4 is a front view of tubes and fine air bubble generating mediums according to an embodiment of the present invention.

### DESCRIPTION OF EMBODIMENT

Next, an embodiment of the invention will be described.

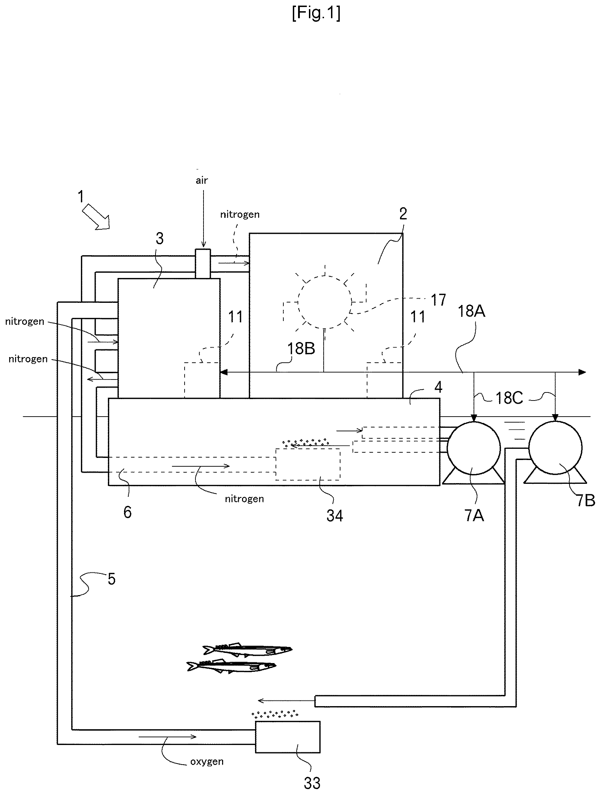

First, a floating power generation unit 1 according to an embodiment of the present invention will be described with reference to FIG. 1.

The floating power generation unit 1 is a device that is installed in a natural water system such as a sea (on the sea), a river (on the river), or a lake (on the lake), and converts natural energy of the sea such as wind power, wave power, a tidal current, an ocean current, or a water flow into electric energy to generate electricity.

The floating power generation unit 1 includes a power generator 2, an oxygen separator 3 that separates oxygen and nitrogen in the air using electric power supplied by the power generator 2, a float 4 floating on the water, an oxygen discharge pipe 5 that discharges oxygen, a nitrogen discharge pipe 6 that discharges nitrogen, and pumps 7A and 7B that supply a water flow to the oxygen discharge pipe 5 and the nitrogen discharge pipe 6.

The power generator 2 is a device that generates electric power by rotationally driving a generator 17 by natural energy. The generator 17 is rotationally driven by natural energy of the sea such as wave power, tidal current, and ocean current. On the sea or on the lake, the power of the wave in the water, the power of the tide, or the wind power on the water is used to rotate the turbine to drive the generator 17.

As an example of a power generator that converts natural energy into electric energy in the present embodiment, a wind power generator 2A that converts wind power into electric energy to generate electricity will be described.

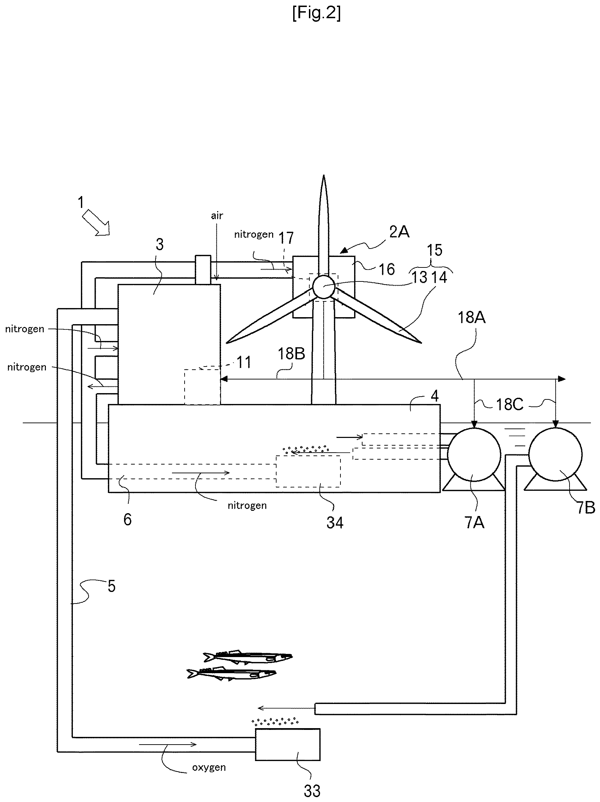

As illustrated in FIG. 2, the wind power generator 2A includes a rotatable rotor 15 including a hub 13 having a rotation shaft (not illustrated) and a plurality of blades 14 attached to the hub 13. The rotor 15 is rotatably supported by a nacelle 16 via the rotation shaft (not illustrated), and transmits the rotational force of the rotor 15 to the generator 17 in the nacelle 16. In the wind power generator 2A, the rotor 15 rotates when the blades 14 receive wind, and the generator 17 is rotated by the rotational force of the rotor 15 to generate electric power.

The power generator 2 includes a main power transmission cable 18 A for transmitting electric power to various power transmission facilities (not illustrated) on land. The main power transmission cable 18A is branched, and is connected to a power transmission cable 18B for oxygen separator that transmits a part of electric power to the oxygen separator 3, and a power transmission cable 18C for pump that transmits electric power to the pumps 7A and 7B.

The oxygen separator 3 is a device that separates and discharges oxygen in the air, and is a device that discharges the remaining air obtained by degassing oxygen as a gas containing mostly nitrogen. Examples of the oxygen separator 3 include a pressure swing adsorption type oxygen separator, a membrane separation type oxygen separator, a cryogenic separation type oxygen separator, a vacuum pressure swing adsorption type oxygen separator, and the like.

As an example of the oxygen separator 3 in the present embodiment, a pressure swing adsorption type oxygen separator 3A which is one of adsorption-separation processes will be described.

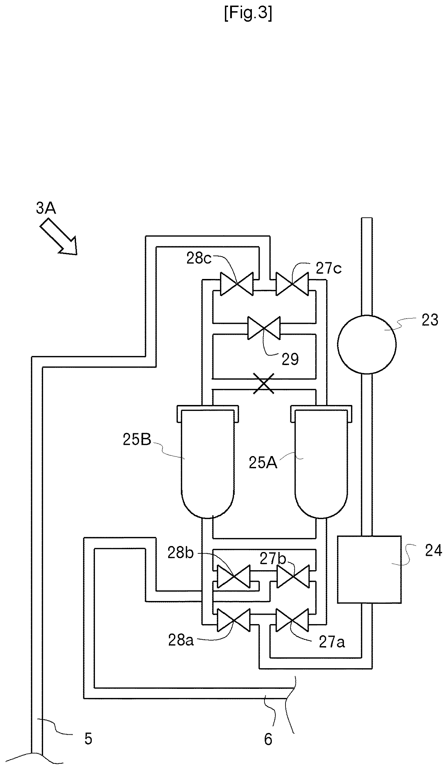

As illustrated in FIG. 3, the oxygen separator 3A separates air using an adsorption material that selectively adsorbs nitrogen. The adsorbent includes, for example, zeolite. Oxygen can be efficiently obtained by adsorbing and removing nitrogen in the air under pressure using the property that the equilibrium adsorption amount of nitrogen and oxygen in the adsorbent is greatly different under pressure.

The oxygen separator 3A includes a compressor 23 that compresses air, a dehumidifier 24 that dehumidifies the air pressure-fed by the compressor 23, and two adsorption towers 25 A and 25B.

The oxygen separator 3A generates oxygen by repeating the adsorption/desorption step.

First, air as a raw material is taken in from the atmosphere in the compressor 23. The compressed air removes moisture by the dehumidifier 24 and is sent to the adsorption towers 25A and 25B. The paths to the two adsorption towers 25A and 25B are alternately switched in units of several 10 seconds in the following steps by opening and closing the valve.

By opening a first suction valve 27a, the pressure of the air introduced into the first adsorption tower 25A is increased to the adsorption pressure. On the other hand, a second nitrogen discharge valve 28b of the second adsorption tower 25B is opened, and the pressure is reduced to atmospheric pressure to discharge the adsorbed nitrogen gas and the like to the nitrogen discharge pipe 6.

In the air introduced into the first adsorption tower 25A, nitrogen gas, carbon dioxide gas, moisture, and the like are adsorbed by the adsorbent, and oxygen gas is sent from a first oxygen discharge valve 27c through an oxygen discharge pipe 5 (adsorption step). On the other hand, in the second adsorption tower 25B, the adsorbent is regenerated by the oxygen gas from the first adsorption tower 25A passing through the orifices in upper portion of the two towers (desorption step).

When the adsorption step in the first adsorption tower 25A and the desorption step in the second adsorption tower 25B are completed, the first suction valve 27a, the second nitrogen discharge valve 28b, and the first oxygen discharge valve 27c are closed, and connection valves 29 on the upper and lower sides of both the towers are opened to equalize the pressures of both the towers.

Next, the second suction valve 28a, the first nitrogen discharge valve 27b, and the second oxygen discharge valve 28c are opened, the desorption step is performed in the first adsorption tower 25A, and the adsorption step is performed in the second adsorption tower 25B. When the adsorption step in the second adsorption tower 25B and the desorption step in the first adsorption tower 25A are completed, the second suction valve 28a, the first nitrogen discharge valve 27b, and the second oxygen discharge valve 28c are closed, and the connection valves 29 above and below the two towers are opened to equalize the pressures of the two towers.

By repeating this, oxygen is supplied from the oxygen discharge pipe 5, and nitrogen is discharged from the nitrogen discharge pipe 6.

The float 4 is a base for installing the power generator 2 and the oxygen separator 3 on water. The float 4 is a structure in which a floating block 4a is supported by a plurality of support columns 4b, and has sufficient buoyancy to hold the power generator 2 and the oxygen separator 3 installed on the upper surface on water. Lake water, sea water, or the like can flow into the float 4, and when the lake water or the sea water flows into the float, the buoyancy of the float can be adjusted and balanced.

The float 4 is fixed to the seabed or the bottom of a lake by a string and a pile (not illustrated), and returns from a tilted state and a rotated state by using a moment of inertia.

The oxygen discharge pipe 5 is a pipe that feeds and discharges oxygen generated in the oxygen separator 3 into water. A discharge port 5a of the oxygen discharge pipe 5 is disposed below the water surface and at a depth where aquatic organisms such as fish and shellfish propagate. A fine air bubble generating medium 33 is provided in the discharge port 5a.

As illustrated in FIGS. 1 and 2, the fine air bubble generating medium 33 is disposed to be connected to the discharge port 5a. The fine air bubble generating medium 33 is disposed so as to be parallel to a direction in which water pressure-fed from a pump 7B flows (direction of black arrows in FIG. 2). In the present embodiment, the fine air bubble generating medium 33 is disposed so as to be parallel to the direction in which the water pressure-fed from the pump 7B flows, but the present invention is not limited thereto, and the fine air bubble generating medium 33 may be disposed so that the downstream side is inclined downward with respect to the direction in which the water pressure-fed from the pump 7B flows. The fine air bubble generating medium 33 is provided with an internal space 33a connected to the discharge port 5a.

The fine air bubble generating medium 33 is made of a carbon-based porous material, and as illustrated in FIG. 3, has a large number of fine pores 33A having a diameter of several µm to several tens µm. The fine air bubble generating medium 33 is a conductor, and bubbles generated from the fine air bubble generating medium 33 are negatively charged. In other words, when passing through the fine air bubble generating medium 33 which is a conductor, free electrons are added to ultrafine air bubbles, so that negative charges are charged. This negative charge can prevent bubbles from repelling each other and coalescing into large bubbles.

The carbon-based porous material is a composite material containing only carbon or carbon and ceramic, and is an inorganic material. A film having a thickness of several nm is formed on the surface of the carbon-based porous material. The film is formed of an inorganic film containing silicon. The carbon-based porous material has oxidation resistance, and does not generate rust and deteriorate due to participation even when disposed in water for a long period of time. In addition, the surface is formed of an inorganic film containing silicon, and has a property that aquatic organisms such as barnacles hardly adhere to the surface.

The oxygen sent from the oxygen discharge pipe 5 to the internal space 33a moves to the surface of the fine air bubble generating medium 33 through the fine pores 33A having a diameter of several µm to several tens µm provided in the fine air bubble generating medium 33. Oxygen having moved to the surface of the fine air bubble generating medium 33 becomes ultrafine air bubbles, and is released into water by the force of water pressure-fed from the pump 7B.

The nitrogen discharge pipe 6 is a pipe for feeding and discharging nitrogen generated in the oxygen separator 3 into the oxygen separator 3 itself and water. The nitrogen discharge pipe 6 is branched, and one nitrogen discharge pipe 6 returns to the inside of the oxygen separator 3. As a result, oxidation of each component of the oxygen separator 3 is suppressed, and generation of rust is prevented. Further, another nitrogen discharge pipe 6 returns to the inside of the power generator 2. As a result, it is possible to suppress oxidation and to prevent deterioration of each component in the power generator 2, particularly, an electrode, a contact, and the like.

The discharge port 6a of the nitrogen discharge pipe 6 is disposed below the water surface so as to return nitrogen to the inside of the float 4. That is, nitrogen discharged from the nitrogen discharge pipe 6 is discharged to sea water or lake water coming in the float 4. As a result, sea water or lake water containing nitrogen easily comes into contact with each component such as the floating block 4a and the support column 4b of the float 4, and oxidation of each component is suppressed to prevent generation of rust. A fine air bubble generating medium 34 is provided in the discharge port 6a.

As illustrated in FIGS. 1 and 2, the fine air bubble generating medium 34 is disposed to be connected to the discharge port 6a. The fine air bubble generating medium 34 is disposed so as to be parallel to a direction in which water pressure-fed from the pump 7A flows (direction of black arrows in FIG. 2). In the present embodiment, the fine air bubble generating medium 34 is disposed so as to be parallel to the direction in which the water pressure-fed from the pump 7A flows, but the present invention is not limited thereto, and the fine air bubble generating medium 34 may be disposed so that the downstream side is inclined downward with respect to the direction in which the water pressure-fed from the pump 7A flows. The fine air bubble generating medium 34 is provided with an internal space 34a connected to the discharge port 6a.

The pump 7A also acts as a circulation pump for circulating sea water or lake water inside the float 4. The sea water or lake water inside the float 4 is supplied in a circulating manner, and nitrogen is repeatedly supplied as fine air bubbles inside the float 4, so that the nitrogen concentration in the sea water or lake water inside the float 4 increases.

The fine air bubble generating medium 34 is made of a carbon-based porous material, and as illustrated in FIG. 3, has a large number of fine pores 34A having a diameter of several µm to several tens µm. The fine air bubble generating medium 34 is a conductor, and bubbles generated from the fine air bubble generating medium 34 are negatively charged. In other words, when passing through the fine air bubble generating medium 34 which is a conductor, free electrons are added to ultrafine air bubbles, so that negative charges are charged. This negative charge can prevent bubbles from repelling each other and coalescing into large bubbles.

The carbon-based porous material is a composite material containing only carbon or carbon and ceramic, and is an inorganic material. A film having a thickness of several nm is formed on the surface of the carbon-based porous material. The film is formed of an inorganic film containing silicon.

The nitrogen sent from the nitrogen discharge pipe 6 to the internal space 34a moves to the surface of the fine air bubble generating medium 34 through the fine pores 34A having a diameter of several µm to several tens µm provided in the fine air bubble generating medium 34. Oxygen having moved to the surface of the fine air bubble generating medium 34 becomes ultrafine air bubbles, and is released into water by the force of water pressure-fed from the pump 7A.

Next, a step of supplying oxygen and nitrogen as fine air bubbles in the floating power generation unit 1 will be described.

In the power generator 2, the oxygen separator 3 is driven by supplying the generated electric power. In the oxygen separator 3, air as a raw material is taken in from atmosphere in the compressor 23. The compressed air removes moisture by the dehumidifier 24 and is sent to the adsorption towers 25A and 25B. By repeating the adsorption/desorption step in the two adsorption towers 25A and 25B, oxygen is generated and sent to the oxygen discharge pipe 5. Further, the remaining air obtained by degassing oxygen is discharged from the nitrogen discharge pipe 6 as a gas containing mostly nitrogen.

The oxygen sent from the oxygen discharge pipe 5 is sent to the internal space 33a of the fine air bubble generating medium 33, and is discharged as fine air bubbles from the fine pores 33A. Oxygen generated on the surface of the fine air bubble generating medium 33 as fine air bubbles is separated from the surface by the force of water pressure-fed from the pump 7B and released into water. By discharging oxygen as fine air bubbles, it is possible to increase the activity of aerobic organisms, promote the growth of plankton, and improve fishing grounds. As a result, it is possible to secure abundant marine resources without destroying the ecosystem of the fishing ground near the floating power generation unit 1. In the water area in which the floating power generation unit 1 was installed, a water flow was dammed up because a structure was formed in a place that had been originally a fishing ground. For this reason, the supply amount of oxygen changed, and the growth environment of aquatic organisms might deteriorate. However, in the floating power generation unit 1 described in the present invention, sufficient oxygen can be supplied to the water area near the floating power generation unit 1. As a result, it is possible to achieve coexistence of the power generation business and the fishery in one water area.

The nitrogen sent from the nitrogen discharge pipe 6 is sent to the internal space 34a of the fine air bubble generating medium 34, and is discharged as fine air bubbles from the fine pores 34A. Nitrogen generated on the surface of the fine air bubble generating medium 34 as fine air bubbles is separated from the surface by the force of water pressure-fed from the pump 7A and released into water. By discharging nitrogen as fine air bubbles, oxidation of the floats 4 in the vicinity is prevented, so that generation of rust can be suppressed. In addition, since the nitrogen component generated by the oxygen separator 3 has no oxidizing effect, deterioration of the float 4 can be suppressed.

As described above, the floating power generation unit 1 can improve the environment of the surrounding fishing ground by using oxygen and nitrogen in the air, and can prevent deterioration of the unit and reduce the number of times of maintenance.

As illustrated in FIG. 1, a dehumidifier 11 for removing moisture in the inside may be disposed inside the power generator 2 and the oxygen separator 3. As a result, it is possible to prevent deterioration due to moisture in the power generator 2 and the oxygen separator 3 disposed in a humid environment on water. Electric power is supplied from the power generator 2 to the dehumidifier 11.

The moisture absorbed by the dehumidifier 11 is stored in a liquid state in the dehumidifier, stored in a certain amount, and then discharged to the sea water or lake water in the float 4. When the floating power generation unit is disposed on the sea, the salinity of seawater in the float 4 can be reduced, so that deterioration of the float 4 due to salinity can be prevented.

As described above, the floating power generation unit 1 according to the present embodiment includes the power generator 2, the oxygen separator 3 that separates oxygen and nitrogen in the air using the electric power supplied by the power generator 2, and the float 4 floated on the water, and the power generator 2 and the oxygen separator 3 are installed on the upper surface of the float 4. The floating power generation unit 1 includes the first fine air bubble generating medium 33 that supplies oxygen separated by the oxygen separator 3 into water as fine air bubbles, and the second fine air bubble generating medium 34 that supplies nitrogen separated by the oxygen separator 3 into water as fine air bubbles.

With such a configuration, it is possible to spray an oxygen content generated by the oxygen separator 3 that separates oxygen and nitrogen in the air using the electric power of the power generator 2 into water as fine air bubbles while performing floating power generation. As a result, it is possible to increase the activity of aerobic organisms, promote the growth of plankton, and improve fishing grounds. In addition, the generation of barnacles and the like can be suppressed by causing the nitrogen component generated by the oxygen separator 3 to flow out to the vicinity of the float 4. In addition, the oxidation can be suppressed to suppress deterioration of the float 4, and the maintenance cost can be reduced. In addition, in the generation method using the fine air bubble generating medium 34, since power for generating fine air bubbles is small, generated electricity can be used without waste.

The first fine air bubble generating medium 33 and the second fine air bubble generating medium 34 may be formed of a carbon-based porous material.

With such a configuration, by being formed of a carbon-based porous material, the first fine air bubble generating medium 33 and the second fine air bubble generating medium 34 are not deteriorated even if disposed in water for a long period of time, and thus maintainability is improved.

The first fine air bubble generating medium 33 may be disposed at a position deeper in water depth than the second fine air bubble generating medium 34.

With such a configuration, the oxygen content generated by the oxygen separator 3 can be released to a water area having a deep water depth where there are many aquatic organisms. In addition, the nitrogen component generated by the oxygen separator 3 can be released to a shallow water area where the lower surface of the float is disposed.

### INDUSTRIAL APPLICABILITY

The present invention is applicable to a technology of a floating power generation unit including a structure such as a power generator and installed on a float floating on the sea or on a lake, the floating power generation unit including an oxygen supply device that supplies oxygen to water around the float.

### REFERENCE SIGNS LIST

- 1: floating power generation unit
- 2: power generator
- 2A: wind power generator 2A
- 3: oxygen separator
- 3A: oxygen separator
- 4: float
- 4a: floating block
- 4b: support column
- 5: oxygen discharge pipe
- 5a: discharge port
- 6: nitrogen discharge pipe
- 6a: discharge port
- 6A: pore
- 7A•7B: pump
- 11: dehumidifier
- 13: hub
- 14: blade
- 15: rotor
- 16: nacelle
- 17: generator
- 18A: main power transmission cable
- 18B: power transmission cable for oxygen separator
- 18C: power transmission cable for pump
- 23: compressor
- 24: dehumidifier
- 25A: first adsorption tower
- 25B: second adsorption tower
- 27a: first suction valve
- 27b: first nitrogen discharge valve
- 27c: first oxygen discharge valve
- 28a: second suction valve
- 28b: second nitrogen discharge valve
- 28c: second oxygen discharge valve
- 29: connection valve
- 33: first fine air bubble generating medium
- 33a: internal space
- 33A: pore
- 34: second fine air bubble generating medium
- 34a: internal space
- 34A: pore

## Claims

1. A floating power generation unit comprising:
a power generator;
an oxygen separator that separates oxygen and nitrogen in air using electric power supplied by the power generator; and
a float floating on water, wherein
the power generator and the oxygen separator are installed on an upper surface of the float,
a first fine air bubble generating medium that supplies oxygen separated by the oxygen separator into water as fine air bubbles, and
a second fine air bubble generating medium that supplies nitrogen separated by the oxygen separator into water as fine air bubbles.

2. The floating power generation unit according to claim 1, wherein
the first fine air bubble generating medium and the second fine air bubble generating medium are formed of a carbon-based porous material.

3. The floating power generation unit according to claim 1 or 2, wherein
the first fine air bubble generating medium is disposed at a position deeper in water depth than the second fine air bubble generating medium.

4. The floating power generation unit according to any one of claims 1 to 3, wherein
nitrogen separated by the oxygen separator is supplied to the power generator and the oxygen separator to fill the power generator and the oxygen separator with the nitrogen.
